# EUROPÄISCHE PATENTSCHRIFT

(11) **EP 2 171 733 B1**
(45) Veröffentlichungstag und Bekanntmachung des Hinweises auf die Patenterteilung: **13.08.2014**
(21) Anmeldenummer: 08761042.4
(22) Anmeldetag: 16.06.2008
(51) Int. Cl.: H02K 3/18

(54) **ELEKTROMAGNETISCH ERREGBARE SPULE**
ELECTROMAGNETICALLY EXCITABLE COIL
BOBINE À EXCITATION ÉLECTROMAGNÉTIQUE

(30) Priorität: 22.06.2007 DE 102007029306
(43) Veröffentlichungstag der Anmeldung: 07.04.2010
(73) Patentinhaber: Robert Bosch GmbH, 70442 Stuttgart (DE)
(72) Erfinder: KLJAIC, Michael, 71691 Freiberg (DE); BODENDORFER, Harald, 75428 Illingen (DE)
(86) Internationale Anmeldenummer: PCT/EP2008/057525
(87) Internationale Veröffentlichungsnummer: WO 2009/000684

(56) Entgegenhaltungen:
- WO-A-2007/055210
- JP-A- 9 232 125
- JP-A- 2000 166 193
- JP-A- 2003 009 444
- US-A1- 2003 051 616

## Beschreibung

### Offenbarung der Erfindung

Die Erfindung betrifft eine elektromagnetisch erregbare Spule, wie sie in elektrischen Maschinen Verwendung findet. Derartige Spulen dienen beispielsweise dazu, einen Stator elektromagnetisch zu erregen und dadurch die Bewegung eines Rotors zu bewirken.

### Stand der Technik

Bei Statoren von großformatigen elektrischen Maschinen wird der Stator üblicherweise mit vielen, nach radial innen gerichteten Statorzähnen ausgestattet, die jeweils von einer Spule umgeben sind. Diese Spulen haben dabei üblicherweise, von radial außen oder radial innen betrachtet, einen etwas länglichen Querschnitt, das heißt die Spule erstreckt sich in Axialrichtung der elektrischen Maschine (Axialrichtung definiert durch die Drehachse des Rotors) mit der längeren Seite der Spule, während die kürzere Seite der Spule in Umfangsrichtung des Stators ausgerichtet ist. Um eine möglichst hohe Leistungsfähigkeit der elektrischen Maschine zu erreichen, ist es erforderlich, eine möglichst enge Packung der Spulen am Innenumfang des Stators anzuordnen. Andererseits ergibt sich durch die Bewicklung der Spule von in Bezug zur Maschinengeometrie radialen Außenseite nach radial innen immer wieder das Problem, dass der Draht der Spule von radial innen wieder nach radial außen geführt werden soll, ohne zusätzlich - in Umfangsrichtung gesehen - die Breite der Spule zu vergrößern.

In der JP 2000 166193 A ist eine elektromagnetisch erregbare Spule offenbart mit einer unvollständigen vierten Windungsschicht in einem ersten Ausführungsbeispiel und mit drei vollständigen Windungsschichten in einem zweiten Ausführungsbeispiel.

Aus der US 2003/051616 A ist eine elektromagnetisch erregbare Spule bekannt mit fünf vollständigen Windungsschichten, wobei Windungslücken ausschließlich in der fünften Windungsschicht vorgesehen sind.

Aus der JP 09 232125 A ist eine elektromagnetisch erregbare Spule nach den Merkmalen des Oberbegriffs des Hauptanspruchs bekannt.

Ausgehend von diesem Stand der Technik liegt der Erfindung die Aufgabe zugrunde, bei Spulen mit ungerader Windungszahl den Draht nach der letzten Windung über die zuvor gewickelten Windungen hinweg an das axiale Ende der Spule zu führen, wo der Wicklungsanfang positioniert ist, ohne dabei die effektive Breite der Spule in Umfangsrichtung zu vergrößern.

### Offenbarung der Erfindung

Diese Aufgabe wird erfindungsgemäß dadurch gelöst, dass die elektromagnetisch erregbare Spule mit den Merkmalen des Anspruchs 1 ausgebildet ist und durch die damit verbundene Drahtkreuzung an der kürzeren Seite des Querschnitts vor dem zweiten Ende (Wicklungsende) der Spule positioniert ist.

Gemäß einer weiteren Ausführung der Erfindung ist vorgesehen, dass die Spule zumindest drei Windungsschichten aufweist, wobei die äußerste Schicht nur über einen Teil der Spule gewickelt ist und wobei die äußerste und die unmittelbar darunter angeordnete Windungsschicht jeweils zumindest eine Windungslücke aufweisen. Eine derartige Anordnung hat den Vorteil, dass einerseits die in der äußersten Schicht vorgesehene Windungslücke dazu genutzt werden kann, dem vom ersten Ende der Spule deutlich abgewandten Beginn der äußersten Wicklung Draht zuführen zu können, ohne eine Spulenverbreiterung in Umfangsrichtung zu erreichen, wo sie nicht erwünscht ist, andererseits führt die Windungslücke in der Windungsschicht unmittelbar unter der äußersten Windungsschicht dazu, dass der Draht nach dem Wickeln der äußersten Schicht wieder ohne Abrutschgefahr auch am axialen Stirnende (schmale Seite) zum ersten Ende der Spule zurückgeführt werden kann.

Gemäß einer bevorzugten Ausgestaltung der Erfindung ist dabei zumindest die letzte Windungsschicht - also ggf. auch nur die eine einzige Windungsschicht - unter Ausbildung zumindest einer Windungslücke gewickelt. Der der Drahtkreuzung nachfolgende Abschnitt des Drahts wird dann, bevor dieser mit seinem Wicklungsende am ersten Ende der Spule positioniert wird, in diese eine Windungslücke gesetzt. Dies führt dazu, dass der Draht vor seinem vorgesehenen Wicklungsende praktisch noch einmal um die Spule herum gewickelt ist (zwei Windungslücken) und dadurch der Draht nach der Drahtkreuzung sicher positioniert ist. Ein Lösen bzw. Abrutschen des Drahtes, ganz besonders vor der Drahtkreuzung und damit an der in Umfangsrichtung orientierten Seite, kann dadurch verhindert werden. Letzteres ist ganz besonders von Bedeutung, da ein derartiges Abrutschen zur Verbreiterung der Spule in Umfangsrichtung führen würde, was durch die Erfindung u. a. vermieden werden soll. Zudem könnte ein derartiges Abrutschen des Drahtes dazu führen, dass dabei die erforderliche und auf jeden Fall vorgesehene Drahtisolation nicht beschädigt wird.

Handelt es sich bei der Spule um eine in radialer Richtung gesehen verhältnismäßig lange Spule, könnte bei einer Anordnung des Drahts nach der Drahtkreuzung in einer verhältnismäßig steilen Position ein Abrutschen des Drahtes aus seiner Lage vor der Drahtkreuzung erfolgen, da die Wicklung üblicherweise doch eine gewisse Lose aufweist. Um dies zu verhindern ist vorgesehen, dass die zumindest eine Windungslücke zwischen dem ersten Ende und dem zweiten Ende der Spule positioniert ist und vorzugsweise dabei mittig und/oder an anderen Zwischenpositionen positioniert ist. So kann beispielsweise vorgesehen sein, dass die Windungslücke nach einem Drittel der Länge und eine weitere Windungslücke nach einem weiteren Drittel der Länge der Spule positioniert ist. Dies führt folgerichtig dazu, dass die Drahtkreuzung, das heißt der Draht, der die anderen Drähte kreuzt, verhältnismäßig flach über die Windungen geführt ist und somit ein Lösen des Drahts vor den Drahtkreuzungen äußerst unwahrscheinlich ist

Ist die Spule so gestaltet, dass diese zwischen ihren beiden auf die Spulen- bzw. Wicklungsachse bezogenen axialen Enden, das heißt axial innen und axial außen, unterschiedlich große Querschnitte aufweist, so kann ein guter Kompromiss zwischen erforderlichem Material für die Flussführung im Ständereisen, das heißt auch im Ständerzahn, der von der Spule umgeben ist, erreicht werden und die Raumausnutzung in dem Ringabschnitt des Stators erreicht werden, in dem die Zähne angeordnet sind. In einer besonderen Ausgestaltung der Erfindung ist an dieser Stelle vorgesehen, dass die Spule von einem axialen Ende zum anderen axialen Ende in radialer Richtung (also in Richtung zur Maschinenachse) einen konisch verlaufenden Innenraum aufweist, der sich insbesondere nach radial innen verjüngt. Ist dabei am Ende mit dem kleineren Querschnitt die äußere unvollständige Windungsschicht angeordnet, so lässt sich ein optimales Ergebnis bezüglich Flussführung im Zahn als auch Raumnutzung der Spule um den Zahn herum bewirken.

### Kurze Beschreibung der Zeichnungen

Im Folgenden wird die Erfindung anhand einiger in der Zeichnung dargestellter Ausführungsbeispiele näher erläutert.

Es zeigen meist schematisch:
Figur 1a und Figur 1b einen Längsschnitt durch eine Spule gemäß einem ersten Beispiel in zwei Bewicklungszuständen, Figur 1c eine Draufsicht auf die Spule,
Figur 2a und Figur 2b ein zweites Beispiel in zwei Bewicklungszuständen,
Figur 3a und Figur 3b ein drittes Beispiel in zwei Bewicklungszuständen,
Figur 4a, b, c, d eine Wicklung in vier verschiedenen Bewicklungszuständen gemäß einem vierten Beispiel.
Figur 5a, b, c eine Wicklung mit drei Windungsschichten in drei verschiedenen Bewicklungszuständen,
Figur 6a, b, c, d und e eine Wicklung mit drei Windungsschichten, wobei die dritte Windungsschicht unvollständig ist,
Figur 7a und b ein Ausführungsbeispiel einer Spule, hier ausgeführt mit fünf Windungsschichten, wobei die fünfte Windungsschicht unvollständig ist,
Figur 8 in schematischer Darstellung eine elektrische Maschine mit einer erfindungsgemäßen Spule,
Figur 9 schematisch eine elektrische Maschine mit einem Stator, der eine erfindungsgemäße Spule trägt.

### Ausführungsformen der Erfindung

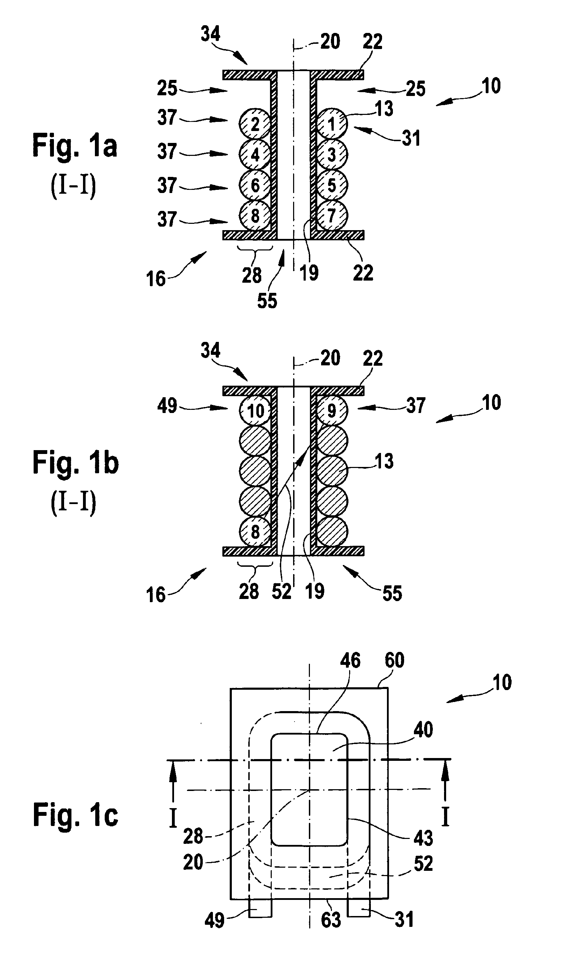

Figur 1 zeigt in einem Längsschnitt eine elektromagnetisch erregbare Spule 10, wobei diese aus einem Draht 13 besteht, der in eine Wickelrichtung um einen Drahthalter 16 gewickelt ist. Betrachtet man die Spule 10 in diesem Fall vom oberen axialen Ende, sei hier als Wickelrichtung definiert, dass der Draht 13 gegen den Uhrzeigersinn um einen Hülsenabschnitt 19 bzw. die Achse 20 des Drahthalters 16 gewickelt ist. Um einen eindeutigen axialen Anschlag für den Draht 13 zu erhalten, ist der Hülsenabschnitt 19 an jedem axialen Ende mit einem Bund 22 versehen. In diesem Beispiel ist, wie in allen weiteren Beispielen, definiert, dass das erste Ende 34 der Spule 10 das in diesem Beispiel obere Ende der Spule 10 ist. Die Spule 10 gemäß diesem Beispiel ist dabei wie folgt gewickelt: Zunächst ist am ersten Ende 34 der Spule 10 eine Windungslücke 25 rund um den Hülsenabschnitt 19 freigelassen, so dass die einzige Windungsschicht 28 mit ihrem Wicklungsanfang 31 nicht unmittelbar am Bund 22 des ersten Endes 34 der Spule 10 anliegt, sondern nur im Wesentlichen am ersten Ende 34 angeordnet ist. Ausgehend von dieser Position des Wickelungsanfangs 31 wird der Draht 13 in der definierten Wickelrichtung mit in diesem Fall vier Windungen 37 um den Hülsenabschnitt 19 gewickelt. Die in Figur 1a dargestellten Kreise stellen schematisch den Querschnitt des Drahtes 13 in der Schnittebene dar. Dabei geben die in den Kreisen einbeschriebenen Nummern die Reihenfolge dar, in die der Draht 13 durch die Schnittebene hindurch tritt. Ein Kreis mit der eingeschriebenen Zahl "1" stellt somit den erstmaligen Durchtritt des Drahtes 13 durch die Schnittebene dar, während ein Kreis mit der Zahl "2" den zweiten Durchtritt des Drahtes 13 durch die Schnittebene darstellt. Die eingeschriebenen Zahlen geben somit eine eindeutige Zuordnung zwischen den einzelnen Durchtritten an und damit auch eine eindeutige Angabe, wie der Draht 13 um den Hülsenabschnitt 19 gewickelt ist Aus Gründen der Übersichtlichkeit und Konzentration auf das Wesentliche in der Darstellung der Erfindung sind nicht überall alle Zahlen für die Durchtritte eingetragen.

In Figur 1b ist demzufolge dargestellt, wie der Draht nach dem achten Durchtritt durch die Schnittebene von der untersten linken Position in der ersten Windungsebene 28 an das erste Ende 34 der Spule 10 positioniert wird, um die Windungslücke 25 bzw. Windungslücken 25 nunmehr mit einer fünften Windung 37 um den Hülsenabschnitt 19 herum zu vervollständigen.

Figur 1c zeigt in diesem Zusammenhang schematisch die axiale Draufsicht von oben auf die Spule 10. Wie deutlich zu erkennen ist, weist die Spule 10 einen länglichen Querschnitt 40 auf, wobei der Querschnitt 40 eine längere Seite 43 und eine kürzere Seite 46 aufweist. In Figur 1c sind auch der Wicklungsanfang 31 und das Wicklungsende 49 zu erkennen. In Figur 1c ist auch eine Windungsschicht 28 eingezeichnet, die in der Figur deutlich erkennbar an der kürzeren Seite 46 von einer Drahtkreuzung 52 gequert wird. Diese Drahtkreuzung 52 stellt in Zusammenschau mit der Figur 1b den Abschnitt des Drahtes 13 dar, der vom achten Durchtritt des Drahtes 13 durch die Schnittebene zum neunten Durchtritt des Drahtes 13 durch die Schnittebene verläuft. Diese Drahtkreuzung ist in Figur 1b symbolisch durch den dort eingezeichneten Pfeil dargestellt.

Figur 1 zeigt somit eine elektromagnetisch erregbare Spule 10, mit einem Draht 13, wobei der Draht 13 in einer Wickelrichtung um einen Drahthalter 16 gewickelt ist, mit einem Wicklungsanfang 31, welcher im Wesentlichen an einem ersten Ende 34 der Spule 10 angeordnet ist. Das Wicklungsende 49 ist im Wesentlichen am gleichen Ende 34 der Spule 10 angeordnet. Die Spule 10 weist zudem eine ungerade Anzahl an Windungsschichten 28 - hier eine - auf. Die Spule 10 weist einen länglichen Querschnitt 40 auf, der eine längere Seite 43 und eine kürzere Seite 46 hat, wobei der Draht 13 unter Ausbildung zumindest einer Drahtkreuzung 52 an der kürzeren Seite 46 des Querschnitts 40 von einem zweiten Ende 55 der Spule 10 an das erste Ende 34 der Spule 10 geführt ist.

Es wurde erwähnt, dass der Wicklungsanfang 31 im Wesentlichen am ersten Ende 34 der Spule angeordnet sein soll. Dies bedeutet, dass der Wicklungsanfang 31 beispielsweise unmittelbar am ersten Ende 34 der Spule 10 angeordnet sein kann, umfasst jedoch auch beispielsweise eine zweite oder eventuell, je nach Erfordernissen, auch eine weitere der Windungspositionen in der Nähe des ersten Endes 34. Dieses Beispiel zeigt darüber hinaus, dass die letzte und hier einzige Windungsschicht 28 unter Ausbildung zumindest einer Windungslücke 25 gewickelt ist und ein der Drahtkreuzung 52 nachfolgender Schnitt des Drahtes 13, nämlich der Drahtabschnitt, welcher um den Durchtritt des Drahtes 13 durch die Schnittebene mit der Nummer "9" in der zumindest einen Windungslücke 25 sitzt, bevor dieser mit seinem Wicklungsende 49 am ersten Ende 34 der Spule 10 positioniert ist.

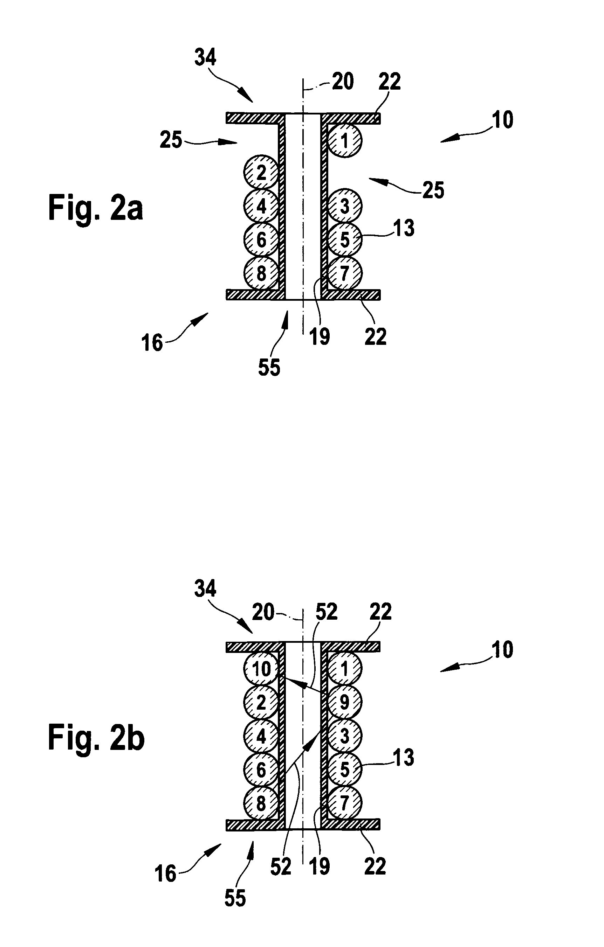

Figur 2a zeigt in analoger Darstellung ein zweites Beispiel der Spule 10. Das zweite Beispiel zeigt in analoger schematischer Weise einen ähnlichen Aufbau, so dass im Wesentlichen hier nur auf die Unterschiede eingegangen ist. Wiederum ist hier der Draht 13 acht Mal in einer einzigen Windungsschicht 28 um den Hülsenabschnitt 19 herum gewunden, wobei in diesem Fall die Windungslücken 25 nur teilweise am ersten Ende 34 der Spule 10 positioniert sind. Hier weist eine Windungslücke 25 eine Position unmittelbar am ersten Ende 34 der Spule 10 auf, während die andere Windungslücke 25 im Wesentlichen am ersten Ende 34 der Spule 10 positioniert ist. In diesem Fall weist das Beispiel zwei Drahtkreuzungen 52 auf, so dass der Drahtabschnitt zwischen den Längsschnittdurchgängen "9" und "10" den Draht 13 zwischen den Längsschnittdurchgängen "1" und "2" kreuzt. Die Drahtkreuzung 52 zwischen den Längsschnittdurchgängen "8" und "9" kreuzt die Windungen zwischen den Längsschnittdurchgängen von "2" nach "3", "4" nach "5" und "6" nach "7".

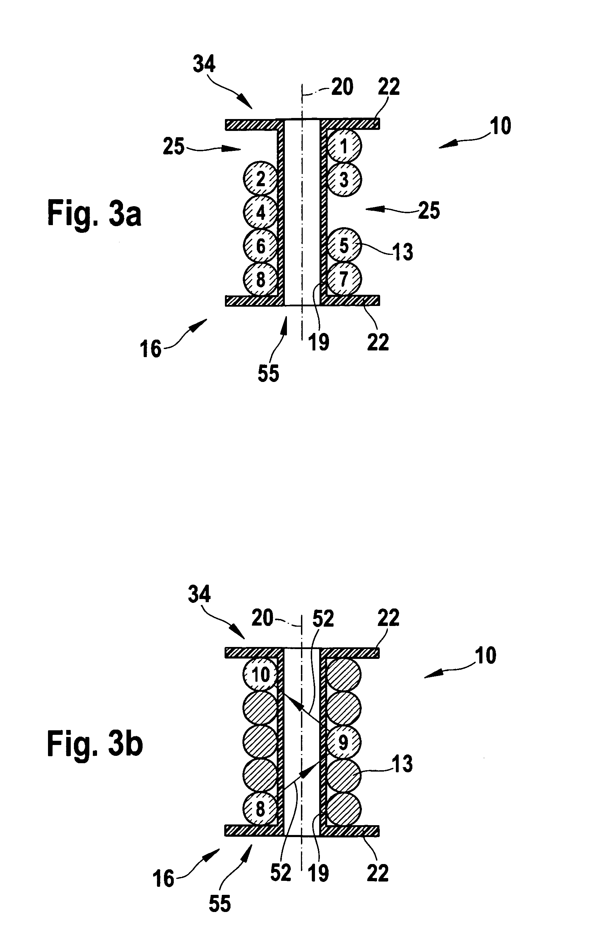

Das Beispiel nach Figur 3a und 3b weist eine Windungslücke 25 auf, die am ersten Ende 34 und eine die zwischen beiden Enden 34 und 55 der Spule 10 positioniert ist. Das Wicklungsschema ist, wie durch die Zahlen in den Querschnitten angegeben, eindeutig und einfach nachvollziehbar und orientiert sich an den vorausgegangenen Beispielen.

Als weiteres Beispiel welches hier nicht bildlich dargestellt ist, kann hier beschrieben werden, dass beispielsweise die erste Windung 37 unmittelbar am ersten Ende 34 der Spule 10 positioniert wird, so dass beide Längsschnittdurchgänge "1" und "2" unmittelbar am ersten Ende 34 angeordnet sind. Nach dieser ersten Windung 37 würde dann beispielsweise zwei Windungslücken 25 gelassen werden, die beispielsweise an der Position der Längsschnittdurchgänge "1" und "2" gemäß Figur 1a positioniert wäre. Die weitere Wicklung würde dann, wie in Figur 1a dargestellt, von den Längsschnittdurchgängen "3" bis "8" weiter verlaufen. Von der Position "8" würde dann die Drahtkreuzung 52 zur Position "9" verlaufen, die an der zweiten Position vor dem ersten Ende 34 der Spule 10 angeordnet wäre und dann einmal um den Hülsenabschnitt 19 herum gewunden würde. Auch in diesem Beispiel wären die Wicklungsenden 31 und 49 im Wesentlichen am selben und in diesem Fall am ersten Ende 34 der Spule 10 positioniert.

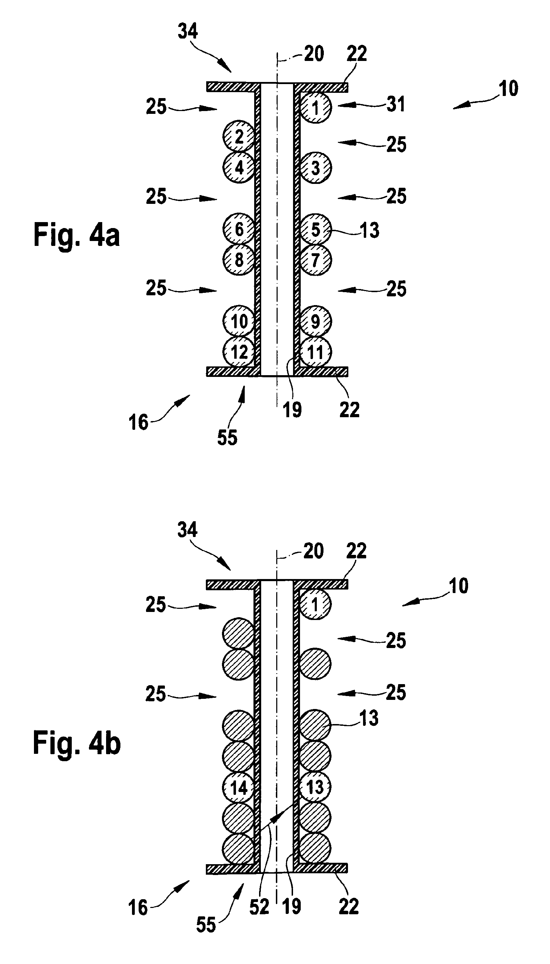

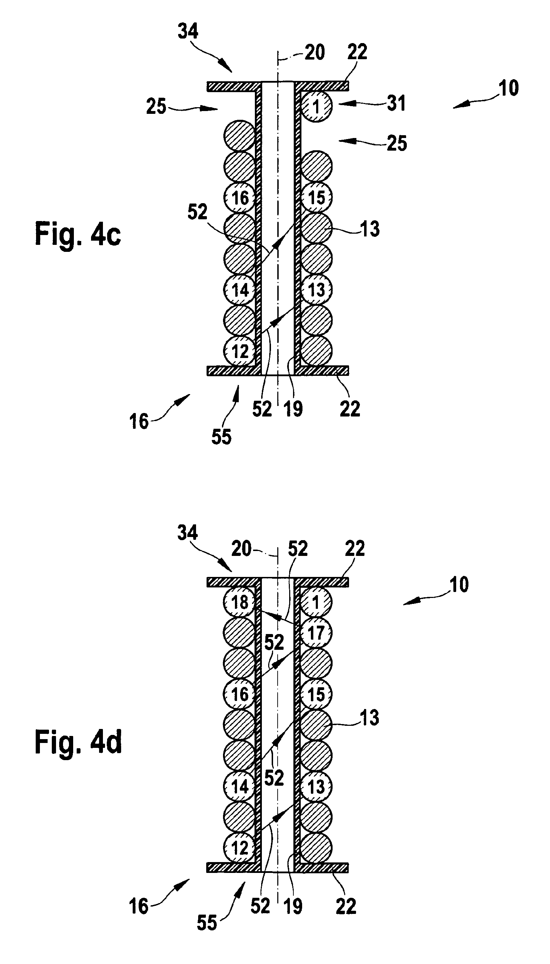

In Figur 4 ist ein weiteres Beispiel einer einschichtigen Spule 10 dargestellt. Der Wicklungsverlauf ist analog zur Erläuterung der bisherigen Beispiele und durch die Zahlen in den Kreisen, die die Querschnitte des Drahtes 13 symbolisieren, gekannzeiuchnet. So beginnt der Wicklungsanfang 31 unmittelbar am ersten Ende 34 der Spule 10, um insgesamt sechs Mal um den Hülsenabschnitt 19 gewunden zu werden. Dabei werden in diesem Fall mehrere Windungslücken 25 berücksichtigt, die es ermöglichen, den Draht 13 von der untersten, das heißt dem zweiten Ende 55 nächstgelegenen Position zum ersten Ende 34 zu führen, ohne den Draht 13 an einer der Seiten 46 bzw. 43 abrutschen zu lassen. Der Draht 13 wird somit mit den Längsschnittdurchgängen 13, 14, 15, 16, 17 und 18 an das erste Ende 34 zurückgeführt, siehe auch Figur 4b, c und d. Der Draht 13 kreuzt dabei auf der Vorderseite 60, siehe Figur 1c, die Windungen 37 insgesamt 3 Mal mit Drahtkreuzungen 52 und auf der Rückseite 63, siehe Figur 1c, der Spule 10 ein Mal.

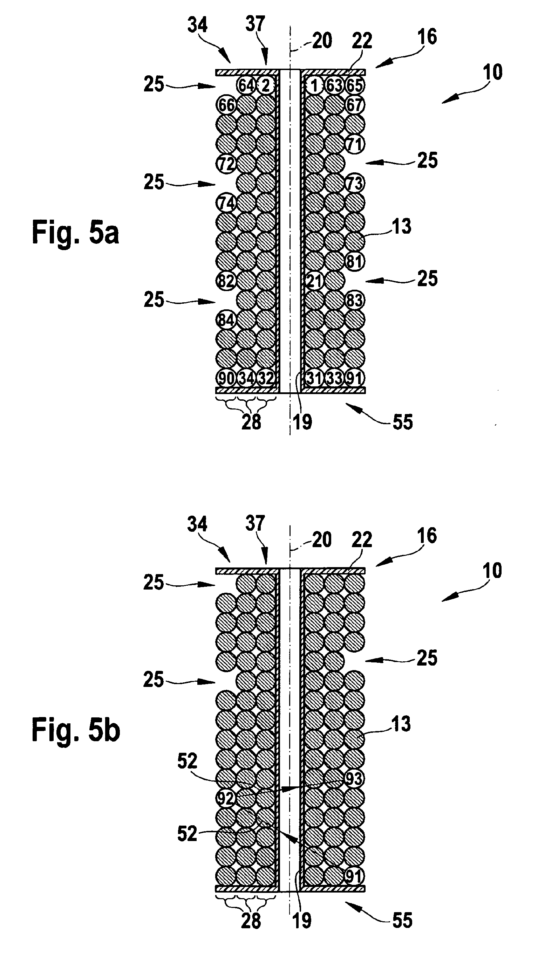

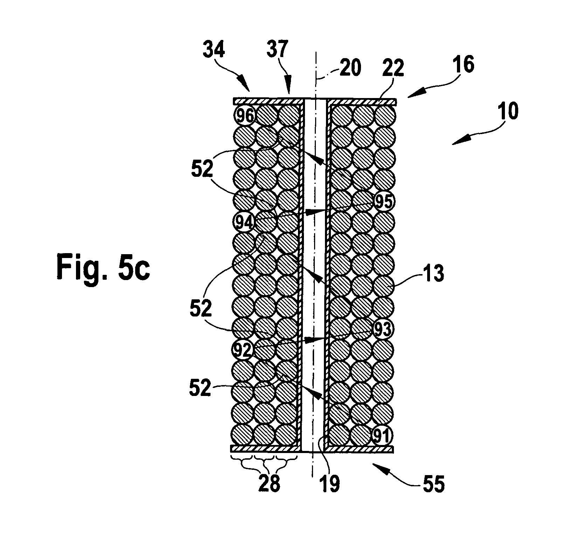

In Figur 5 ist ein weiteres Beispiel dargestellt, das in diesem Fall drei Windungsschichten 28 aufweist.

In Figur 5 ist ein weiteres Beispiel einer Spule 10 dargestellt, das in diesem drei Windungsschichten 28 aufweist. Dabei werden analog zu den bisherigen Beispielen die Windungen 37 der ersten, innersten Windungsschicht 28, beginnend mit dem Drahtquerschnitt 1 um den Hülsenabschnitt 19 herum insgesamt sechzehn Mal gewunden, bis der Draht an der Position "32" am anderen Ende 55 der Spule 10 angelangt ist. Von dieser Position "32" aus wird der Draht an die Position "33" gelegt und somit die zweite Windungsschicht 28 am zweiten Ende 55 der Spule 10 begonnen. Von dort ausgehend wird die zweite Windungsschicht 28 unmittelbar auf die erste Windungsschicht 28 gewickelt, und nach weiteren sechzehn Windungen schließlich am ersten Ende 34 der Spule 10 beendet (Position "63" bzw. "64). Von dort ausgehend wird die dritte Windungsschicht 28 an der Position "65" begonnen und unter gezieltem Vorsehen von Windungslücken 25 in der dritten Windungsschicht 28 an das zweite Ende 55 der Spule 10 gewickelt. In diesem Fall sind sowohl Windungslücken 25 am ersten Ende 34 als auch in etwa jeweils einem Drittel der Windungen 37 der äußersten Windungsschicht 28.

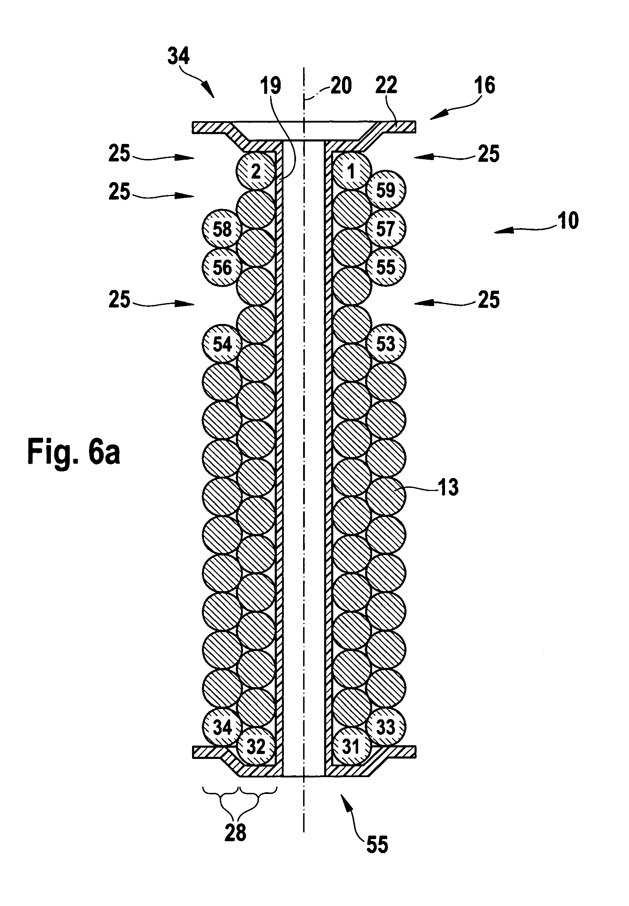

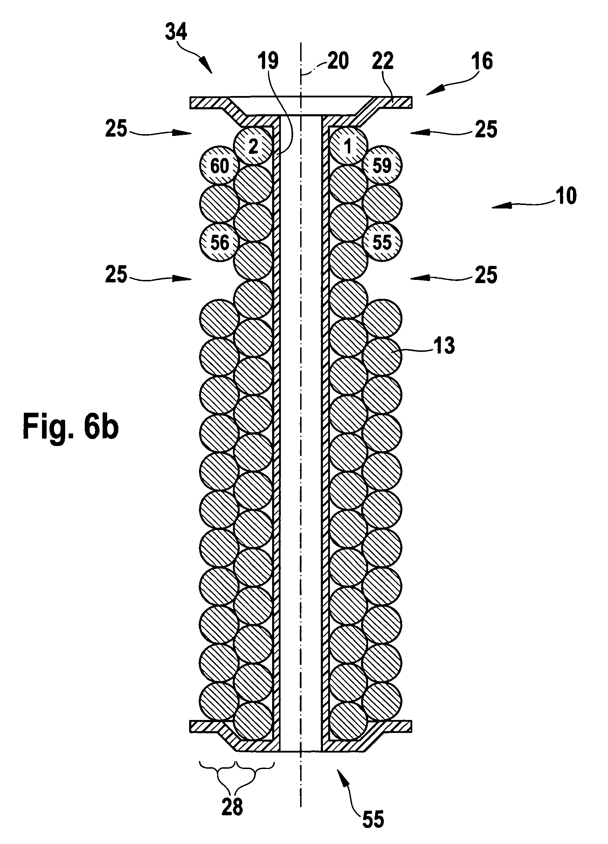

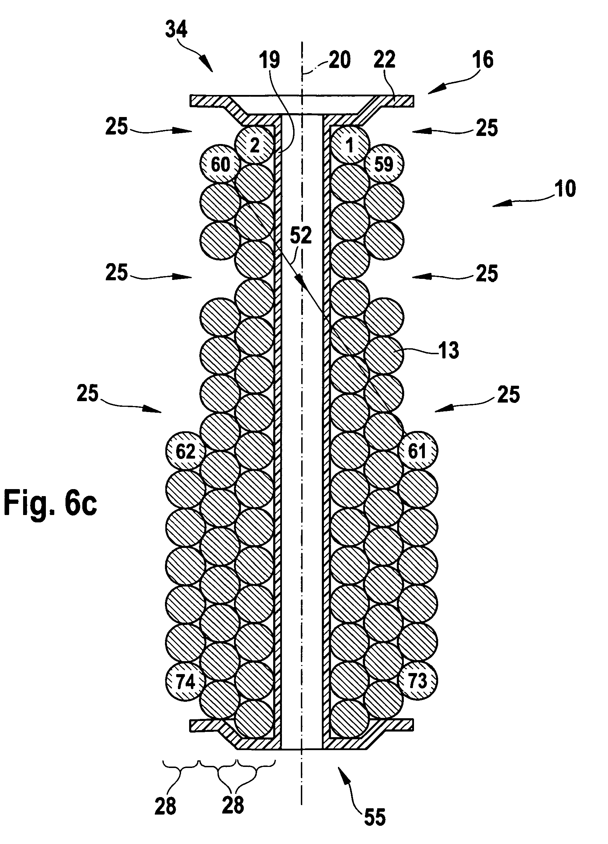

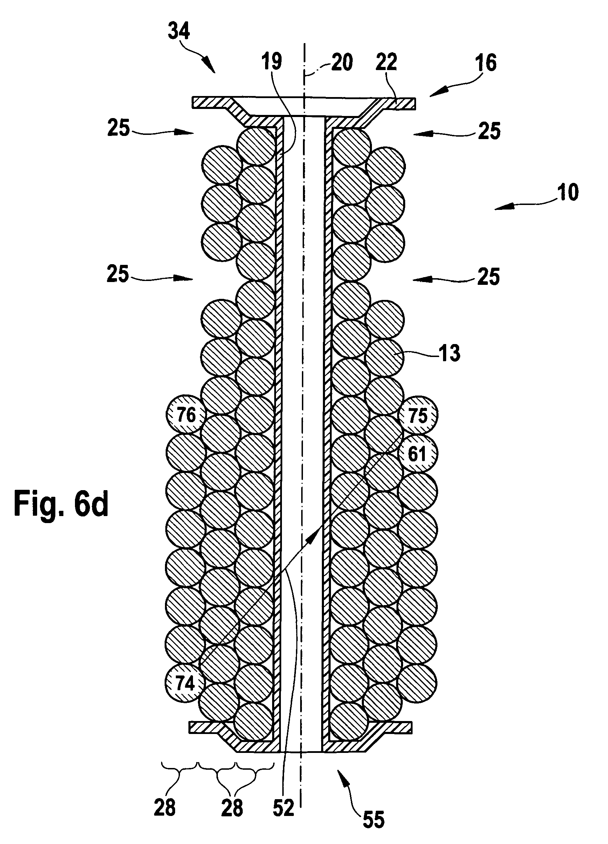

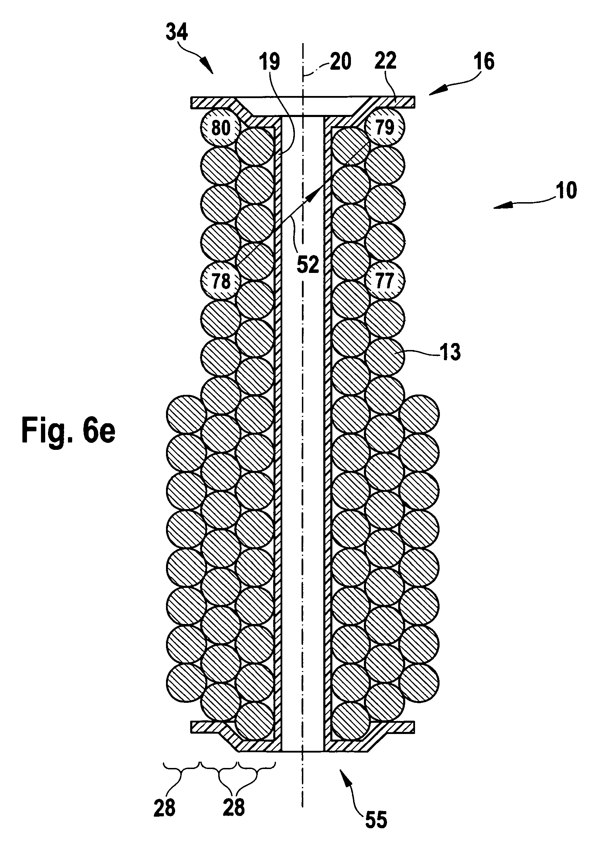

Ist die äußerste Windungsschicht 28 schließlich am anderen Ende 55 der Spule 10 angelangt (Position "91"), so wird von dieser letzten Position "91" ausgehend eine Drahtkreuzung 52 in die vom zweiten Ende 55 der Spule 10 ausgesehenen ersten Windungslücke 25 eingelegt (Position "92"), unter Ausbildung einer weiteren Drahtkreuzung 52 wiederum in die nächste Windungslücke 25 eingelegt (Position "93"), von dort unter Ausbildung einer weiteren Drahtkreuzung 52 in die nächste Windungslücke 25 eingelegt (Position "94"), wobei unter Bildung einer vorletzten Drahtkreuzung 52 der Draht 13 in die nächste Windungslücke 25 eingelegt wird (Position "95"). Von dort wird unter Wickeln einer letzten Drahtkreuzung 52 der Draht 13 in die vom zweiten Ende 55 der Spule 10 aus gesehen letzte Windungslücke 25 eingelegt, um von dort letztlich an die Außenseite der Spule 10 gelegt zu werden. Gemäß diesem Beispiel weist die Spule 10 ausschließlich vollständige Windungsschichten 28 auf, wobei die äußerste Windungsschicht 28 zumindest eine Windungslücke 25 aufweist, in diesem Fall fünf Windungslücken. Im erfindungsgemäßen Ausführungsbeispiel gemäß der Figuren 6a, b, c, d und e ist eine Spule 10 mit zumindest drei Windungsschichten 28 dargestellt, wobei die äußerste Windungsschicht nur über einen Teil der Spule 10 gewickelt ist. Dabei weisen sowohl die äußerste Windungsschicht 28 als auch die unmittelbar darunter angeordnete Windungsschicht 28 jeweils zumindest eine Windungslücke 25 auf. Dieses spezielle Ausführungsbeispiel ist ein Ausführungsbeispiel, das beispielhaft für allgemeinere Ausführungsformen gilt. Die Spule kann nicht nur drei Windungsschichten aufweisen, sondern auch fünf, sieben, neun oder elf oder mehrere Windungsschichten 28, die ungeradzahlig sind. Die Bemerkung, wonach die äußerste Windungsschicht 28 nur über einen Teil der Spule 10 gewickelt ist, bedeutet, dass die äußerste Windungsschicht 28 über einen bestimmten Abschnitt der Länge der Spule 10 gewickelt ist und ein anderer Abschnitt nicht durch die äußerste Windungsschicht 28 bewickelt ist.

Das Bewickeln der Spule 10 gemäß Figur 6 läuft dabei ab wie durch die Positionszahlen "1" usw. angegeben ist. Dies bedeutet, dass zunächst eine innerste Windungsschicht 28 von der Positionszahl "1" um den Hülsenabschnitt 19 bis einschließlich zur Position "32" gewickelt wird, um dann von dort ausgehend in die zweite und in diesem Fall vorletzte Windungschicht 28 mit der Positionszahl "33" überzugehen. Von dieser Positionszahl "33" ausgehende, wird diese zweite Windungsschicht 28 bis einschließlich zur Positionszahl "54" durchgängig gewickelt, um dann um dann zwischen zwei Windungen zwei Windungslücken 25 vorzusehen, die beidseitig des Hülsenabschnitts 19 angeordnet sind. Nach diesen beiden Windungslücken 25 fährt die zweite Windungsschicht 28 mit weiteren drei Windungen fort (Positionszahl "55" bis "60"), um dann zwei weitere Windungslücken 25 am ersten Ende 34 der Spule 10 zu belassen. Von der Positionszahl "60" wird dann eine Drahtkreuzung 52 an eine bestimmte Position (Positionszahl "61") der äußersten Windungsschicht 28 gesetzt und von dort ausgehend die äußerste Schicht bis zum zweiten Ende 55 der Spule 10 gewickelt. Die Position "61" ist praktisch die Position, wo die dritte Windungsschicht 28 zunächst beginnt. Ist die dritte Windungsschicht 28 fertig gewickelt (Position "74"), wird von dieser Position "74" ausgehend eine weitere Drahtkreuzung 52 auf den Draht 13 gewickelt, an dem vorläufig die dritte Windungsschicht 28 beginnt. Tatsächlich ist diese dritte Windungsschicht an der Position "61" tatsächlich die zweite Windung der äußersten Schicht 28, da zuvor eine Windungslücke 25 vorgesehen ist. Diese Windungslücke ist bei der äußersten Windungsschicht in diesem Fall erst erkennbar, nachdem der Draht 13 im Anschluss an die Drahtkreuzung 52, von der Position 74 ausgehend, auf die Windung mit den Positionszahlen "61" und "62" mit der Windung mit den Positionszahlen "75" und "76" gewickelt ist, Figur 6d. Ausgehend von der Position "76" wird dann eine weitere Drahtkreuzung 52 in eine der Windungslücken 25 gewickelt, siehe auch Positionen "77" und "78". Von der Position "78" ausgehend, wird eine weitere Drahtkreuzung 52 in die erste Windungslücke 25 am ersten Ende 34 der Spule 10 gesetzt, Position "79", um dort eine abschließende letzte Windung 37 der zweiten und hier unter der äußersten Windungsschicht 28 unmittelbar darunter angeordnete Windungsschicht 28 zu vervollständigen. Nach der Position "80" folgt lediglich das Wicklungsende 49.

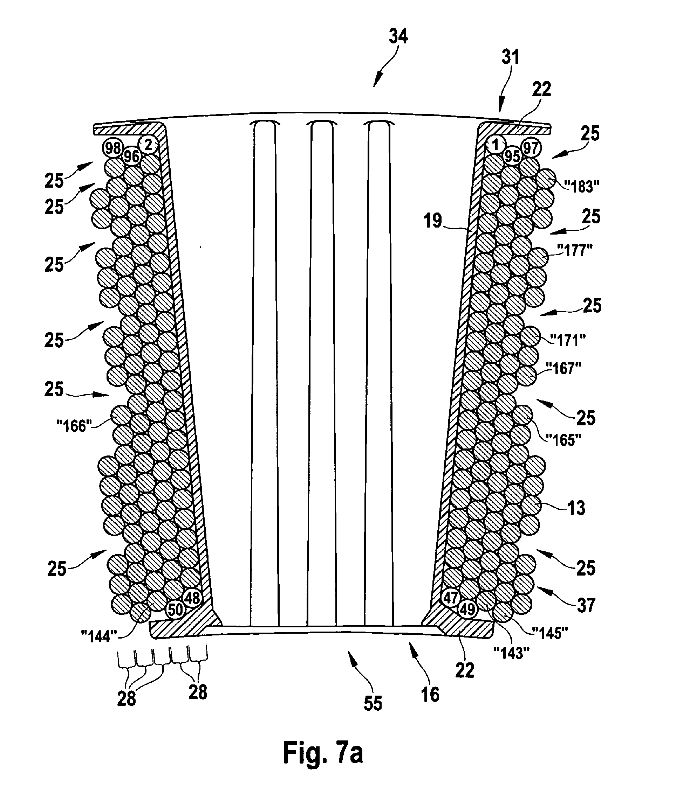

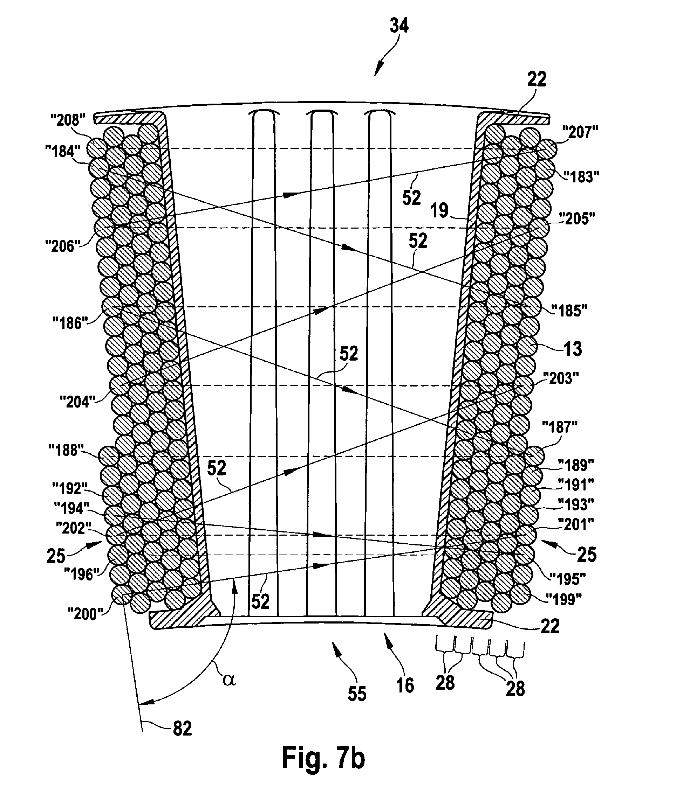

In den Figuren 7a und b ist ein weiteres Ausführungsbeispiel dargestellt, bei der ein Draht 13 auf einen Drahthalter 16 aus einem elektrisch nicht leitfähigen Stoff (Kunststoff) gewickelt ist. Der Drahthalter 16 weist, wie alle Ausführungsbeispiele zuvor, einen Hülsenabschnitt 19 auf, der an einem ersten Ende 34 der Spule 10 und am zweiten Ende 55 der Spule 10 in einen Bund 22 übergeht. Dieser Drahthalter 16 wird hier auch als Spulenkörper bezeichnet und ist aus einem Isoliermaterial gefertigt. Die Spule 10 bzw. der Drahthalter 16 weist von seinem einen axialen Ende 34 zum anderen axialen Ende 55 einen konisch verlaufenden Innenraum auf, so dass die Spule 10 zwischen ihren beiden axialen Enden 34 und 55 unterschiedlich große Querschnitte aufweist.

Wie bereits bei allen zuvor beschriebenen Spulen 10 beschrieben, beginnt die Spule mit einem Wicklungsanfang 31 (Position "1") rechts oben unmittelbar am Umfang des Hülsenabschnitts 19 unterhalb des oberen Bunds 22, der am ersten Ende 34 angeordnet ist. Von dort wird der Draht 13 mit zunächst achtundvierzig Windungen bis zur Position "48" gewickelt. Damit ist eine erste Windungsschicht 28 vollständig gewickelt. Ausgehend von dem Draht 13 an der Position "48" wird der Draht nunmehr in einer zweiten Windungsschicht 28 an die Position "49" gesetzt, um von dort ausgehend eine zweite Windungsschicht 28 nunmehr vom zweiten Ende 55 der Spule 10 auf die erste Windungsschicht 28 zu legen, um letztlich an der Position "96" kurz vor dem ersten Ende 34 der Spule 10 zu enden. Von dort ausgehend wird der Draht 13 nunmehr in die dritte Windungsschicht 28 gelegt (Position "97"). Von dort ausgehend wird der Draht 13 nun in der dritten Windungsschicht 28 bis an die Position "143" gewickelt, um hiermit die dritte Wicklungsschicht 28 zu komplettieren. Von dort ausgehend wird der Draht dann in die vierte Windungsschicht gelegt (Position "144"), um dann diese vierte Windungsschicht zunächst durchgehend bis zur Position "165" durchgehend und lückenlos zu wickeln. An dieser Stelle ist die vierte Windungsschicht 28 nunmehr von zwei Windungslücken 25 gefolgt, denen dann wiederum eine gewisse Anzahl, hier drei, Windungen des Drahts 13, dann wieder zwei Windungslücken 25 folgen. In diesem Ausführungsbeispiel folgen des Weiteren noch zwei Mal jeweils drei Windungen 37, die jeweils von Windungslücken 25 unterbrochen bzw. gefolgt sind.

Der Übersichtlichkeit wegen wird in Figur 7b auf diverse Positionsangaben vor der Position "183" verzichtet. Ausgehend von der Position "183" wird nunmehr der Draht 13 in die auf der linken Seite der Spule 10 vom ersten Ende 34 aus gesehen zweite Windungslücke 25 hineingelegt (Position "184"), um von dort eine erste Drahtkreuzung 52 zur dritten Windungslücke 25 auf der rechten Seite der Spule 10 zu legen. Von dort aus (Position "185") wird der Draht 13 um die dritte Windungsschicht 28 zur Position "186" gelegt, welche nunmehr die vierte Windungslücke 25 belegt. Von der Position "186" wird eine weitere Drahtkreuzung 52 zur Position "187" gelegt, die damit den vom ersten Ende 34 betrachteten Anfang der fünften Windungsschicht 28 darstellt. Von dieser Position aus werden gemäß diesem Ausführungsbeispiel einige Windungen, hier vier, ohne Unterbrechnung durch eine Windungslücke 25 lückenlos gewickelt, um von der Position "194" aus dann auf der rechten Seite an die übernächste Position "195" zu springen und somit eine Windungslücke 25 zu bilden. In Figur 7b ist diese Lücke 25 zwar belegt, darauf wird jedoch später eingegangen werden. Von der Position "195" unterhalb der einen Windungslücke 25 wird die fünfte Windungsschicht 28 unter Ausbildung einer zweiten Windungslücke 25 auf der linken Seite der Spule 10 mit drei weiteren Windungen von der Position "196" aus an die Position "197" und über die Position "198" an "199" gewickelt. Die fünfte Windungsschicht 28 ist damit am zweiten Ende 55 der Spule 10 angelangt ("200"). Der Draht 13 wird anschließend in die vom unteren bzw. zweiten Ende 55 der Spule 10 aus betrachtet, Windungslücken 25 eingewickelt (Position "201" und "202"), um von dort dann in die noch freien Windungslücken 25 in Richtung zum ersten Ende 34 der Spule 10 gelegt zu werden (Positionen "203" bis "208").

In dem Ausführungsbeispiel gemäß Figur 7a und 7b ist demzufolge eine elektromagnetisch erregbare Spule 10 offenbart, bei der die unmittelbar unter der äußersten Windungsschicht 28 angeordnete Windungsschicht, hier die vierte Windungsschicht 28, zumindest eine weitere Windungslücke 25 aufweist, in die der Draht 13 im Verlauf zwischen der äußersten Windungsschicht 28 und dem ersten Ende der Spule 34 angeordnet ist und die unmittelbar unter der äußersten Windungsschicht 28 angeordnete Windungsschicht zumindest eine weitere Windungslücke 25 aufweist, in die der Draht 13 im Verlauf zwischen dem ersten Ende 34 der Spule und der äußersten Windungsschicht 28 angeordnet ist.

Wie in Figur 7a und b dargestellt, ist am Ende 55 mit dem kleineren Querschnitt die äußerste unvollständige Windungsschicht 28 angeordnet.

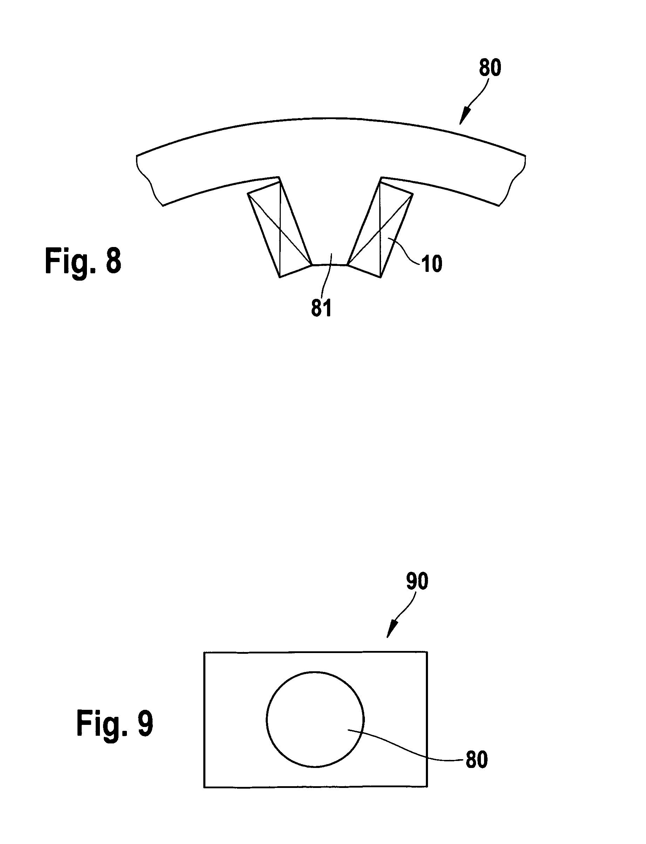

Gemäß der Darstellung in Figur 8 ist vorgesehen, dass die zumindest eine Spule 10 am Innenumfang eines Stators 80 angeordnet ist und die Spule 10 einen elektromagnetisch erregbaren Pol 81 bzw. Zahn umgibt.

Fig. 9 zeigt schematisch eine elektrische Maschine 90 mit einem Stator 80, der eine erfindungsgemäße Spule 10 trägt.

Der Drahthalter 16 braucht nicht zwingend ein Spulenkörper aus Kunststoff zu sein, der auf einen Zahn oder elektromagnetisch erregbaren Pol 81 aufzuschieben ist. Vielmehr kann der Draht 13 auch unmittelbar auf den elektromagnetisch erregbaren Pol in den vorbeschriebenen Weisen aufgewickelt werden. An dieser Stelle sei vermerkt, dass der Begriff "Draht" 13 einen metallischen Leiter einschließlich Drahtisolation umfasst. Der eine Drahtkreuzung 52 bildende Drahtabschnitt sollte in Bezug zu einer Linie 82 zwischen zwei Windungsschichten 28 einen Winkel α zwischen 60° und 120° aufweisen, um ein Abrutschen bzw. Verlagern nach dem Wickeln zu verhindern.

## Patentansprüche

1. Elektromagnetisch erregbare Spule (10), mit einem Draht (13), wobei der Draht (13) in einer Wickelrichtung um einen Drahthalter (16) gewickelt ist, mit einem Wicklungsanfang (31), welcher im Wesentlichen an einem ersten Ende (34) der Spule (10) angeordnet ist, und mit einem Wicklungsende (49), welches im Wesentlichen an dem gleichen Ende (34) der Spule (10) angeordnet ist, mit einer ungeraden Anzahl an Windungsschichten (28), wobei die Spule (10) einen länglichen Querschnitt (40) aufweist und der Querschnitt (40) eine längere Seite (43) und eine kürzere Seite (46) aufweist, wobei der Draht (13) unter Ausbildung zumindest einer Drahtkreuzung (52) an der kürzeren Seite des Querschnitts (40) von dem zweiten Ende (55) der Spule (10) an das erste Ende (34) der Spule (10) geführt ist, **dadurch gekennzeichnet, dass** die Spule (10) zumindest drei Windungsschichten (28) aufweist, wobei die äußerste Windungsschicht (28) nur über einen Teil der Spule (10) gewickelt ist, wobei die äußerste und die unmittelbar darunter angeordnete Windungsschicht (28) jeweils zumindest eine Windungslücke (25) aufweist.

2. Elektromagnetisch erregbare Spule nach Anspruch 1, **dadurch gekennzeichnet, dass** zumindest die äußerste Windungsschicht (28) unter Ausbildung zumindest einer Windungslücke (25) gewickelt ist und ein der Drahtkreuzung (52) nachfolgender Abschnitt des Drahts (13) in der zumindest einen Windungslücke (25) sitzt, bevor dieser mit seinem Wicklungsende (49) am ersten Ende (34) der Spule (10) positioniert ist.

3. Elektromagnetisch erregbare Spule (10) nach Anspruch 2, **dadurch gekennzeichnet, dass** die zumindest eine Windungslücke (25) im wesentlichem am ersten Ende der Spule (10) positioniert ist.

4. Elektromagnetisch erregbare Spule (10) nach Anspruch 2, **dadurch gekennzeichnet, dass** die zumindest eine Windungslücke (25) zwischen dem ersten Ende (34) und dem zweiten Ende (55) der Spule (10) positioniert ist.

5. Elektromagnetisch erregbare Spule (10) nach einem der vorstehenden Ansprüche, **dadurch gekennzeichnet, dass** die Spule (10) zwischen ihren beiden axialen Enden (34, 55) unterschiedliche große Querschnitte (40) aufweist.

6. Elektromagnetisch erregbare Spule (10) nach Anspruch 5, **dadurch gekennzeichnet, dass** die Spule (10) von einem axialen Ende (34) zum anderen axialen Ende (55) einen konisch verlaufenden Innenraum aufweist.

7. Elektromagnetisch erregbare Spule (10) nach Anspruch 6, **dadurch gekennzeichnet, dass** am Ende (55) mit dem kleineren Querschnitt (40) die äußerste unvollständige Windungsschicht (28) angeordnet ist.

8. Elektrische Maschine mit zumindest einer Spule (10) nach einem der vorstehenden Ansprüche.

9. Elektrische Maschine nach Anspruch 8, **dadurch gekennzeichnet, dass** die zumindest eine Spule (10) am Innenumfang eines Stators (80) angeordnet ist und die Spule (10) einen elektromagnetisch erregbaren Pol (81) umgibt.

10. Elektrische Maschine nach Anspruch 8 oder 9, **dadurch gekennzeichnet, dass** der Drahthalter (16) ein elektromagnetisch erregbarer Pol (81) ist.

11. Elektrische Maschine nach Anspruch 8 oder 9, **dadurch gekennzeichnet, dass** der Drahthalter (16) ein auf einen elektromagnetisch erregbaren Pol (81) aufschiebbarer Spulenkörper, vorzugsweise aus einem Isoliermaterial, ist.

## Claims

1. Coil (10) which can be electromagnetically excited, having a wire (13), wherein the wire (13) is wound in a winding direction around a wire holder (16), having a winding start (31) which is arranged substantially at a first end (34) of the coil (10), and having a winding end (49) which is arranged substantially at the same end (34) of the coil (10), having an odd number of turn layers (28), wherein the coil (10) has an elongate cross section (40) and the cross section (40) has a relatively long side (43) and a relatively short side (46), wherein the wire (13) is guided from the second end (55) of the coil (10) to the first end (34) of the coil (10) so as to form at least one wire crossing (52) on the relatively short side of the cross section (40), **characterized in that** the coil (10) has at least three turn layers (28), wherein the outermost turn layer (28) is wound only over a portion of the coil (10), wherein the outermost turn layer (28) and the turn layer (28) which is arranged directly beneath it each have at least one turn gap (25).

2. Coil according to Claim 1 which can be electromagnetically excited, **characterized in that** at least the outermost turn layer (28) is wound so as to form at least one winding gap (25), and a section of the wire (13) which follows the wire crossing (52) is situated in the at least one turn gap (25) before the said wire is positioned by way of its winding end (49) at the first end (34) of the coil (10).

3. Coil (10) according to Claim 2 which can be electromagnetically excited, **characterized in that** the at least one turn gap (25) is positioned substantially at the first end of the coil (10).

4. Coil (10) according to Claim 2 which can be electromagnetically excited, **characterized in that** the at least one turn gap (25) is positioned between the first end (34) and the second end (55) of the coil (10).

5. Coil (10) according to one of the preceding claims which can be electromagnetically excited, **characterized in that** the coil (10) has cross sections (40) of different size between its two axial ends (34, 55).

6. Coil (10) according to Claim 5 which can be electromagnetically excited, **characterized in that** the coil (10) has a conically running interior space from one axial end (34) to the other axial end (55).

7. Coil (10) according to Claim 6 which can be electromagnetically excited, **characterized in that** the outermost incomplete turn layer (28) is arranged at the end (55) with the relatively small cross section (40).

8. Electrical machine having at least one coil (10) according to one of the preceding claims.

9. Electrical machine according to Claim 8, **characterized in that** the at least one coil (10) is arranged on the inner circumference of a stator (80), and the coil (10) surrounds a pole (81) which can be electromagnetically excited.

10. Electrical machine according to Claim 8 or 9, **characterized in that** the wire holder (16) is a pole (81) which can be electromagnetically excited.

11. Electrical machine according to Claim 8 or 9, **characterized in that** the wire holder (16) is a coil former, which is preferably composed of an insulating material, which can be pushed onto a pole (81) which can be electromagnetically excited.

## Revendications

1. Bobine (10) à excitation électromagnétique, avec un fil (13), le fil (13) étant enroulé dans une direction d'enroulement autour d'un support de fil (16), avec un début d'enroulement (31) disposé pour l'essentiel au niveau d'une première extrémité (34) de la bobine (10) et avec une fin d'enroulement (49) disposée pour l'essentiel au niveau de la même extrémité (34) de la bobine (10), avec un nombre impair de couches de spire (28), la bobine (10) comportant une section transversale (40) oblongue et la section transversale (40) comportant un côté (43) plus long et un côté (46) plus court, le fil (13) étant guidé depuis la deuxième extrémité (55) de la bobine (10), au niveau de la première extrémité (34) de la bobine (10), par déformation d'au moins un croisement de fil (52) situé au niveau du côté le plus court de la section transversale (40), **caractérisée en ce que** la bobine (10) comporte au moins trois couches de spire (28), la couche de spire (28) la plus à l'extérieur n'étant enroulée que sur une partie de la bobine (10), la couche de spire (28) la plus à l'extérieur et celle respectivement disposée directement dessous comportant au moins un espace de spire (25).

2. Bobine à excitation électromagnétique selon la revendication 1, **caractérisée en ce qu'**au moins la dernière couche de spire (28) la plus à l'extérieur est enroulée par déformation d'au moins un espace de spire (25) et qu'une section du fil (13) suivant le croisement de fil (52) repose dans l'au moins un espace de spire (25) avant que celui-ci ne soit positionné avec sa fin d'enroulement (49) au niveau de la première extrémité (34) de la bobine (10).

3. Bobine (10) à excitation électromagnétique selon la revendication 2, **caractérisée en ce que** l'au moins un espace de spire (25) est positionné pour l'essentiel au niveau de la première extrémité de la bobine (10).

4. Bobine (10) à excitation électromagnétique selon la revendication 2, **caractérisée en ce que** l'au moins un espace de spire (25) est positionné entre la première extrémité (34) et la deuxième extrémité (55) de la bobine (10).

5. Bobine (10) à excitation électromagnétique selon l'une quelconque des revendications précédentes, **caractérisée en ce que** la bobine (10) comporte des sections transversales (40) de différentes tailles entre ses deux extrémités axiales (34, 55).

6. Bobine (10) à excitation électromagnétique selon la revendication 5, **caractérisée en ce que** la bobine (10) comporte d'une extrémité axiale (34) vers l'autre extrémité axiale (55) un espace intérieur s'étendant en forme de cône.

7. Bobine (10) à excitation électromagnétique selon la revendication 6, **caractérisée en ce que** la couche de spire (28) incomplète la plus à l'extérieur est disposée au niveau de l'extrémité (55) avec sa plus petite section transversale (40).

8. Machine électrique dotée d'au moins une bobine (10) selon l'une quelconque des revendications précédentes.

9. Machine électrique selon la revendication 8, **caractérisée en ce que** l'au moins une bobine (10) est disposée au niveau de la circonférence intérieure d'un stator (80) et que la bobine (10) entoure un pôle (81) à excitation électromagnétique.

10. Machine électrique selon la revendication 8 ou 9, **caractérisée en ce que** le support de fil (16) est un pôle (81) à excitation électromagnétique.

11. Machine électrique selon la revendication 8 ou 9, **caractérisée en ce que** le support de fil (16) est un corps de bobine pouvant être coulissé sur un pôle (81) à excitation électromagnétique et de préférence fabriqué à partir d'un matériau isolant.
